Europäisches Patentamt

European Patent Office

Office européen des brevets

(19)

(11) Publication number : **0 487 344 A2**

(12) # EUROPEAN PATENT APPLICATION

(21) Application number : **91310747.0**

(22) Date of filing : **21.11.91**

(51) Int. Cl.⁵ : **H04M 1/72**

(30) Priority : **22.11.90 JP 315816/90**

(43) Date of publication of application :
**27.05.92 Bulletin 92/22**

(84) Designated Contracting States :
**DE FR GB SE**

(71) Applicant : **NEC CORPORATION**
**7-1, Shiba 5-chome Minato-ku**
**Tokyo 108-01 (JP)**

(72) Inventor : **Ohmichi, Makoto, c/o NEC**
**Corporation**
**7-1, Shiba 5-chome, Minato-ku**
**Tokyo (JP)**

(74) Representative : **Orchard, Oliver John**
**JOHN ORCHARD & CO. Staple Inn Buildings**
**North High Holborn**
**London WC1V 7PZ (GB)**

(54) **Portable radio telephone capable of assigning an answering function to a desired key.**

(57) A portable radio telephone capable of setting up a channel by an electromagnetic wave to a base station which is connected to a telephone network and, on the termination of a call, urging the user of the telephone to press a particular key to which an answering function is fixedly assigned. The telephone allows the user to assign the function of answering the termination of a call to any desired key other than the particular key also.

Fig. 1

BACKGROUND OF THE INVENTION

The present invention relates to a portable radio telephone capable of setting up a channel by an electromagnetic wave to a base station which is connected to a telephone network and, on the termination of a call, urging the user of the telephone to press a particular key to which an answering function is fixedly assigned. More particularly, the present invention is concerned with a portable radio telephone which allows the user to assign the answering function to any desired key other than such a particular key also.

It is a common practice to provide a telephone of the type described with numeral keys for commanding the telephone a particular operation and various function keys, e. g. , a message key and a speed call/redial key. Usually, a particular function is fixedly assigned to each function key in advance, i. e. , the user of the telephone cannot assign a different function to a function key to which a particular function is assigned. For example, the function of answering the termination of a call is fixedly assigned to a particular function key. This requires the user carrying the telephone to press such a predetermined function key on the termination of a call, i. e. , the user cannot answer the termination of a call by pressing another key. This is not desirable considering the fact a portable radio telephone is put on the user's belt by a clip, put in the user's pocket or otherwise carried by the user, depending on the type of the telephone. Specifically, it the particular key having an answering function is fixedly located at a particular position of the telephone, the user carrying the telephone in a particular manner cannot press such a key without once holding it by hand, resulting in a troublesome operation.

SUMMARY OF THE INVENTION

It is, therefore, an object of the present invention to provide a portable radio telephone which facilitates the user's operation for answering the termination of a call with no regard to the manner in which the user carries the telephone.

It is another object of the present invention to provide a portable radio telephone which allows the user to assign the function of answering the termination of a call to any desired key other than predetermined key also.

It is another object of the present invention to provide a generally improved portable radio telephone.

A portable radio telephone capable of setting up a channel by an electromagnetic wave to a base station which is connected to a telephone network of the present invention comprises an antenna for transmitting and receiving an electromagnetic wave to and from the base station, a radio circuit for modulating an electromagnetic wave to be transmitted via the antenna or demodulating an electromagnetic wave received via the antenna, a key section including a plurality of keys to one of which a function of answering the termination of a call is fixedly assigned, and a circuit for assigning the function of answering the termination of a call to, among the plurality of keys, a desired key other than the one key.

A method of the present invention assigns an answering function to any desired key which is one of a plurality of keys provided in a key section of a portable radio telephone. The key section includes a predetermined key to which an answering function is fixedly assigned. The method comprises the steps of preparing a memory, storing data representative of the keys and a key operation sequence beforehand, and registering the desired key at the memory as a key having an answering function if a sequence entered on the key section is coincident with the key operation sequence stored in the memory.

BRIEF DESCRIPTION OF THE DRAWINGS

The above and other objects, features and advantages of the present invention will become more apparent from the following detailed description taken with the accompanying drawings in which:
FIG. 1 is a block diagram schematically showing a portable radio telephone embodying the present invention;
FIGS. 2 and 3 are flowcharts demonstrating a specific operation of the embodiment for assigning the function of answering the termination of a call to a desired key; and
FIG. 4 is a flowchart representative of a specific operation which a controller included in the embodiment executes when a call is terminated.

DESCRIPTION OF THE PREFERRED EMBODIMENT

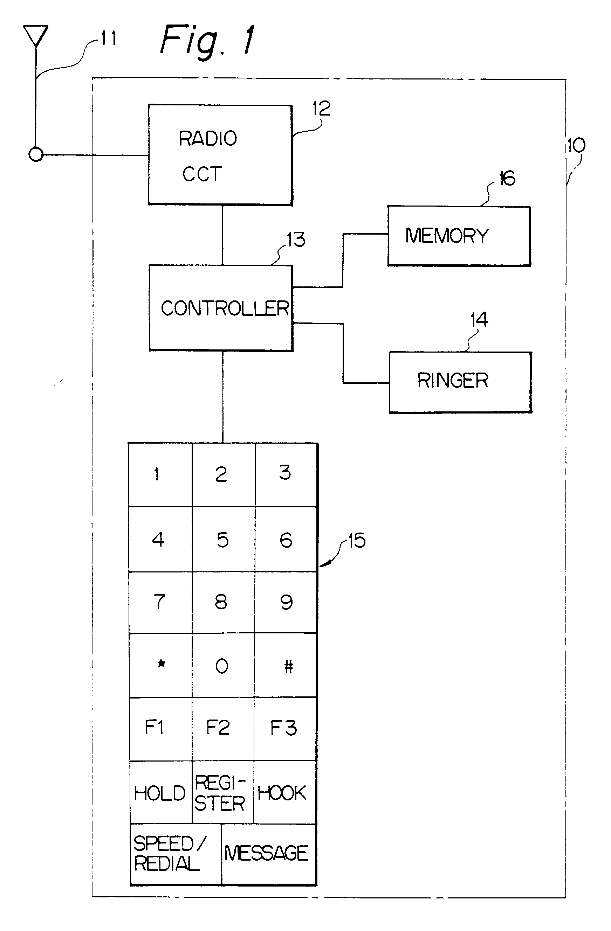

Referring to FIG. 1 of the drawings, a portable radio telephone embodying the present invention is shown and generally designated by the reference numeral 10. The radio telephone sets up a channel by communicating with a base station, not shown, by an electromagnetic wave, the base station being connected to a telephone network. As shown, the radio telephone 10 has an antenna 11 for transmitting and receiving an electromagnetic wave to and from the base station. A radio circuit 12 is made up of a modulator for modulating an electromagnetic wave to be transmitted via the antenna 11, a demodulator for demodulating an electromagnetic wave come in through the antenna 11, and a baseband circuit for control data and message signals meant for a microphone and a speaker. A controller 13 controls the input and output of control commands to and from the radio circuit 12 as well as the operations of the entire telephone 10. A ringer 14 produces an alert tone under the control of the controller 13. Keys 15 include numeral keys, a message key, and a speed call/redial key. These keys 15 may be operated to enter particular operation modes of the telephone 10. A memory 16 stores specific operation data so entered on the keys 15 in response to a command from the controller 13.

In operation, an electromagnetic wave sent from the base station is received via the antenna 11 and demodulated by the radio circuit 12. As a result, voice is produced through the speaker via a voice circuit included in the radio circuit 12, while control data is delivered to the controller 13. When the control data is a command representative of the termination of a call, the controller 13 recognizes it and drives the ringer 14 to produce an alert tone.

The controller 13 constantly monitors the outputs of the keys 15 to see if any input is entered thereon. As the controller 13 detects a key input, it registers key input data at the memory 16. While a call is terminated, the controller 13 determines whether or not a key having been operated is coincident with an answer key registered at the memory 16 and, if the former is coincident with the latter, delivers control data for answering to the radio circuit 12. The radio circuit 12 modulates the control data and then sends it to the base station via the antenna 11 in the form of an electromagnetic wave.

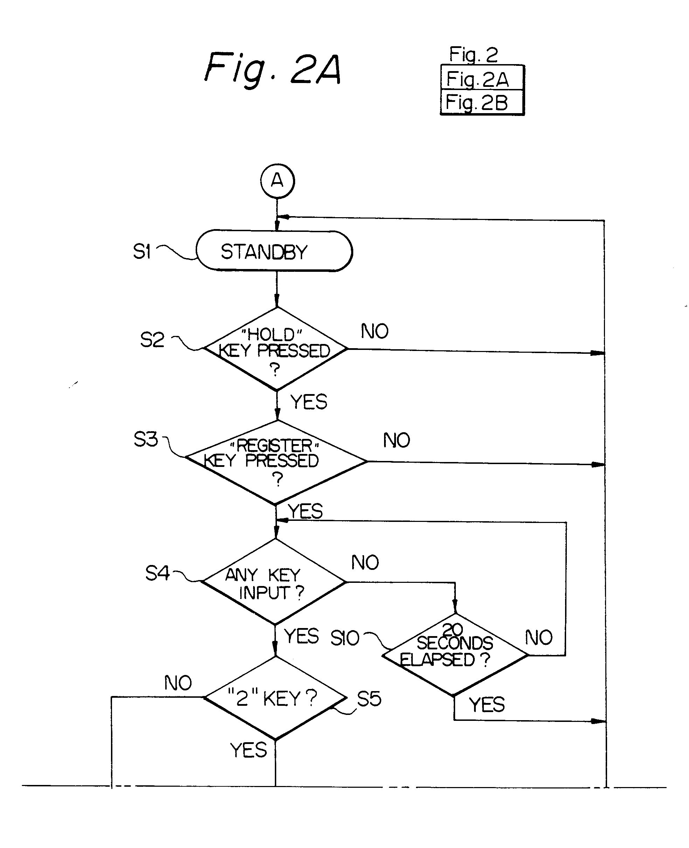

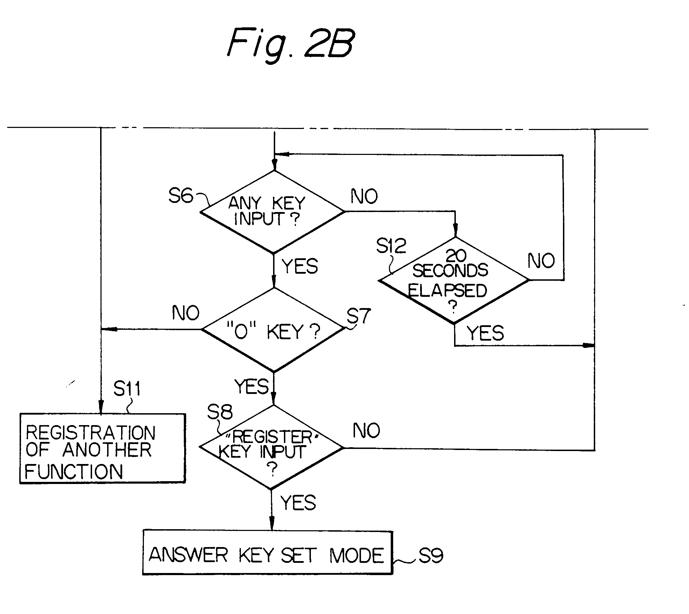

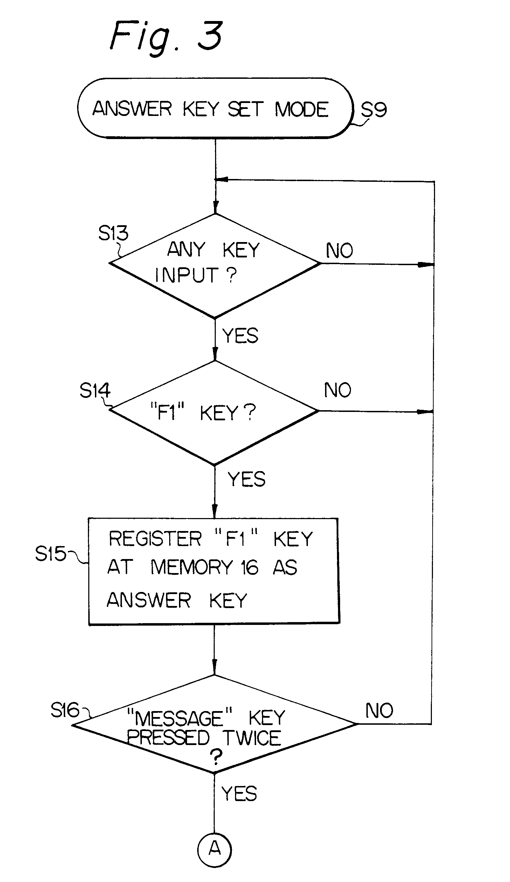

A reference will be made to FIGS. 2 and 3 for describing a specific procedure wherein the user of the telephone 10 assigns the function of the answer key to, among the keys 15, a key labeled "F1".

As shown in FIG. 2, assume that the telephone 10 is held in a standby state, i. e. , the user is not holding a conversation on the telephone 10 or operating it for a particular purpose such as for setting a particular operation (step S1). In this condition, the user presses a key "HOLD" and then a key "REGISTER" (YES, S2 and S3). Of course, the program returns to the step S1 if none of such keys is pressed (NO, S2 and S3). Subsequently, the user sequentially presses numeral keys "2" and "0" in this order within 20 seconds to enter a number "20" which is assigned to an answer key set mode (YES, S4-S7) and then presses the key "REGISTER" again (S8). Then, the program enters into the answer key set mode (S9). If none of the numeral keys is pressed (NO, S4), whether or not 20 seconds have elapsed after the operation of the key "REGISTER" in the step S3 is determined (S10). If the answer of the step S10 is YES, the program returns to the step S1; if it is NO, the program returns to the step S4. When a numeral key other than "2 " is pressed in the step S5 (NO), an operation for registering another kind of function will be performed. If none of the numeral keys is pressed as determined in the step S6 (NO), whether or not 20 minutes have expired after the operation of the key "2" in the step S5 is determined (S12). If the answer of the step S12 is YES, the program returns to the step S1; if it is NO, the program returns to the step S6. When a key other than "0" is pressed as determined in the step S7 (NO), the step S11 is executed.

As shown in FIG. 3, the answer key set mode (S9) begins with a step S13 of determining whether or not any one of the keys 15 is pressed. If some key is pressed (YES, S13), whether or not it is the key "F1" is determined (S14). If the answer of the step S14 is YES, the key "F1" is registered at the memory 16 as an answer key (S15). Thereafter, whether or not a key "MESSAGE" has been pressed twice is determined (S16). If the answer of the step S16 is YES, the procedure returns to the step S1 and ends; if otherwise (NO), the program returns to the step 13.

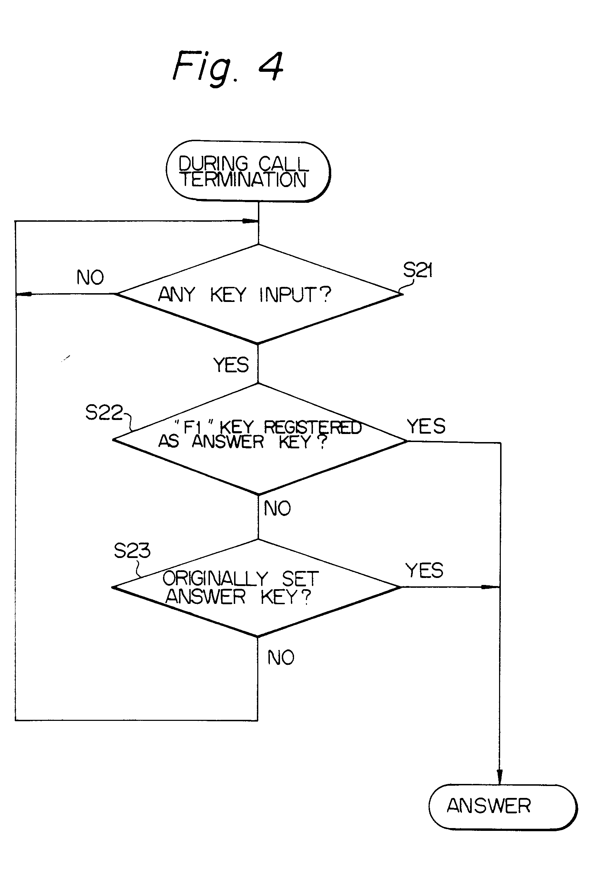

Assume that control data sent from the base station to the telephone 10 comes in through the antenna 11 and radio section 12 to the controller 13 after the key "F1" has been registered at the memory 16 as an answer key. Then, as shown in FIG. 4, the controller 13 determines whether or not a key input is present (S21) and, if the answer is YES, determines whether or not the key input is coincident with the key "F1" registered at the memory 16 (S22). If the answer of the step S22 is NO, the controller 13 determines whether or not the key input is coincident with a key originally and fixedly set for the answering function (S23). If the answer of the step S22 or S23 is YES, the controller 13 delivers control data to the radio circuit 12 for answering the termination of a call. The radio circuit 12 modulates the control data and then sends it to the base station via the antenna 11.

As stated above, the illustrative embodiment allows the user to assign the answering function to a desired key other than an originally set answer key, facilitating the user's operation for answering the termination of a call. Specifically, the user can assign the answering function to any one of the keys which will be easiest to press in response to the termination of a call when the user carries the telephone 10.

Of course, the key "F1 " selected to answer the termination of a call as stated above is only illustrative and may be replaced with any other desired key. Further, the procedure for registering such a particular key described above is not limitative.

Various modifications will become possible for those skilled in the art after receiving the teachings of the present disclosure without departing from the scope thereof.

## Claims

1. A portable radio telephone capable of setting up a channel by an electromagnetic wave to a base station which is connected to a telephone network, said telephone comprising:

an antenna for transmitting and receiving an electromagnetic save to and from said base station;

a radio circuit for modulating an electromagnetic wave to be transmitted via said antenna or demodulating an electromagnetic wave received via said antenna;

a key section including a plurality of keys to one of which a function of answering the termination of a call is fixedly assigned; and

setting means for assigning said function of answering the termination of a call to, among said plurality of keys, a desired key other than said one key.

2. A telephone as claimed in claim 1, further comprising a memory storing data representative of said keys and a key operation sequence beforehand, said desired key being registered at said memory as a key having said function if a sequence entered on said key section is coincident with said key operation sequence stored in said memory.

3. A method of assigning an answering function to any desired key which is one of a plurality of keys provided in a key section of a portable radio telephone, said key section including a predetermined key to which an answering function is fixedly assigned, said method comprising the steps of:

(a) preparing a memory;

(b) storing data representative of said keys and a key operation sequence beforehand; and

(c) registering said desired key at said memory as a key having an answering function if a sequence entered on said key section is coincident with said key operation sequence stored in said memory.

# Fig. 1

# Fig. 2A

| Fig. 2 |
|--------|
| Fig.2A |
| Fig.2B |

A

S1 — STANDBY

S2 — "HOLD" KEY PRESSED ? — NO

YES

S3 — "REGISTER" KEY PRESSED ? — NO

YES

S4 — ANY KEY INPUT ? — NO

YES   S10 — 20 SECONDS ELAPSED ? — NO

NO — "2" KEY ? — S5   YES

YES

# Fig. 2B

# Fig. 3

ANSWER KEY SET MODE )S9

S13 — ANY KEY INPUT ? — NO

YES

S14 — "F1" KEY ? — NO

YES

S15 — REGISTER "F1" KEY AT MEMORY 16 AS ANSWER KEY

S16 — "MESSAGE" KEY PRESSED TWICE ? — NO

YES

(A)

# Fig. 4